**Europäisches Patentamt**

**European Patent Office**

**Office européen des brevets**

(11) Veröffentlichungsnummer: **0 013 708**
**B1**

(12) ## EUROPÄISCHE PATENTSCHRIFT

(45) Veröffentlichungstag der Patentschrift:
**15.07.81**

(51) Int. Cl.³: **B 60 N 3/08,** A 24 F 19/06

(21) Anmeldenummer: **79104674.1**

(22) Anmeldetag: **24.11.79**

(54) **Kippascher, insbesondere für Fahrzeuge.**

(30) Priorität: **26.01.79 DE 2902984**

(43) Veröffentlichungstag der Anmeldung:
**06.08.80 Patentblatt 80/16**

(45) Bekanntmachung des Hinweises auf die Patenterteilung:
**15.07.81 Patentblatt 81/28**

(84) Benannte Vertragsstaaten:
**AT BE FR GB IT NL SE**

(56) Entgegenhaltungen:
**DE-A-2 011 705**

(73) Patentinhaber: **Gebr. Happich GmbH,
Postfach 10 02 49 Clausenbrücke 1,
D-5600 Wuppertal 1 (DE)**

(72) Erfinder: **Cziptschirsch, Kurt, Am Heckendorn 43,
D-5600 Wuppertal 2 (DE)**
Erfinder: **Dabringhaus, Volker, Erkrather Strasse 63,
D-5600 Wuppertal 11 (DE)**

Kippascher, insbesondere für Fahrzeuge

Die Erfindung bezieht sich auf einen Kippascher, insbesondere für Fahrzeuge, dessen Aschenbehälter von einem Lager federbelastet gehalten ist und durch Überlast von der Aschenbehälteraufnahme trennbar ist.

Durch die DE-A 20 11 705 ist bereits ein Kippascher bekannt, bei welchem der Aschenbehälter, wenn er in geöffneter Stellung ist und eine Überlast von oben auf ihn einwirkt, aus seiner Ascherbehälteraufnahme gelöst wird und herausfällt. Damit soll der Gefahr begegnet werden, dass bei einem Aufprall auf den Aschenbehälter durch dessen vorstehende Ecken und Kanten Verletzungen entstehen.

Wie Text und Ausführungsbeispiele ausdrücklich ausweisen, wird der Aschenbehälter bei diesem bekannten Kippascher nur ausgelöst, wenn die Überlast von oben erfolgt. Erfahrungsgemäss kann sogar präzisiert werden, dass die Richtung von oben sehr streng genommen werden muss, denn schräge Belastungsrichtungen lösen den Aschenbehälter schon nicht mehr aus. Und zwar deshalb nicht, weil jeweils die Seitenwandungen von Aschenbehälter und Aschenbehälteraufnahme senkrecht zur Vorderfläche des Kippaschers und nahe aneinandergelegen verlaufen, so dass eine exakte Führung gebildet ist, die den Aschenbehälter auch bei übergrosser Last von der Seite her oder auch von schräg oben nicht auslöst. Aus diesem Grunde ist die Verletzungsgefahr bei einem solchen geöffneten Aschenbehälter für Fahrzeuginsassen nach wie vor gegeben.

Demgemäss besteht die der Erfindung zugrundeliegende Aufgabe darin, einen Kippascher der gattungsgemässen Art so auszubilden, dass der Aschenbehälter in Offenstellung bei starker Belastung von oben und auch von der Seite aus seiner Aufnahme herausgedrückt wird.

Diese Aufgabe wird erfindungsgemäss dadurch gelöst, dass die Seitenwandungen des Aschenbehälters und/oder die der Aschenbehälteraufnahme Schrägflächen aufweisen, deren Richtung von der Vorderkante aus, die Körperform des Aschenbehälters bzw. der Aschenbehälteraufnahme verjüngend, zur Rückwand verläuft. Von der Gattung her ist gewährleistet, dass der Aschenbehälter bei einer Überlast von oben aus seiner Aufnahme gelöst wird. Dies ist, wie nachfolgend einem Ausführungsbeispiel entnehmbar, Grundlage für die erfindungsgemässe Ausbildung. Das Auslösen bei einer Überlast, die von der Seite und auch von schräg oben erfolgt, geschieht sicherwirkend durch Schrägflächen, die sich zueinander in Öffnungsrichtung hin aufweiten. Dabei ist es gleichgültig, wie auch noch in Anschauungsbeispielen aufgeführt wird, ob diese Schrägflächen nur am Aschenbehälter oder nur an der Aschenbehälteraufnahme oder aber an beiden Bauteilen angeordnet sind.

Um den Aschenbecher mit einem ausreichend grossen Stauraum für Asche od. dgl. zu versehen, ihn aber trotzdem nicht übermässig gross ausbilden zu müssen, werden die die Seitenwandung des Aschenbehälters bildenden Schrägen nur bereichsweise ausgebildet. Es ist nämlich möglich, die Schrägflächen am Aschenbehälter so anzuordnen, dass deren Vorderkante bei geöffnetem Aschenbehälter im wesentlichen deckungsgleich mit der Aussenkante der Aschenbehälteraufnahme verläuft oder anders ausgedrückt, es bleibt ohne Belang, wie der Bereich der Seitenwandungen verläuft, welcher bei geöffnetem Aschenbehälter ausserhalb der Aschenbehälteraufnahme zu liegen kommt. Es ist lediglich notwendig, den Bereich der Seitenfläche, der bei geöffnetem Aschenbehälter innerhalb der Aschenbehälteraufnahme verbleibt, mit der erfindungsgemäss verlaufenden Schrägfläche zu versehen.

Auf der Zeichnung ist die Erfindung in mehreren Ausführungsbeispielen in vereinfachter Weise dargestellt. Es zeigen:

Fig. 1 den Kippascher im Vertikalschnitt,
Fig. 2 den Kippascher gemäss Fig. 1 vervollständigt, in Draufsicht
und
Fig. 3 und 4 je ein weiteres Ausführungsbeispiel des Kippaschers in stark schematisierter Darstellung.

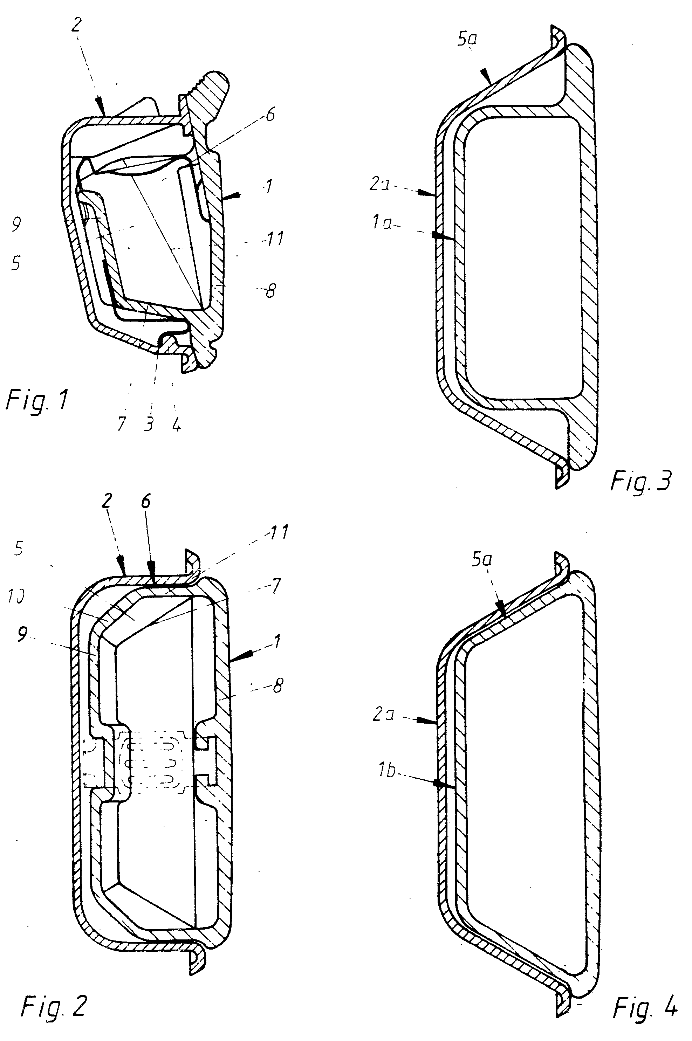

Generell mit 1 ist ein Aschenbehälter und mit 2 eine Aschenbehälteraufnahme bezeichnet. Beim Ausführungsbeispiel nach Fig. 1 bzw. 2 ist der Aschenbehälter 1 mit einer Lagerfeder 3 gehalten, die einen Lagernocken 4 hintergreift und demgemäss bei einer Überlast von oben durch Aufbiegen der Lagerfeder 3 ihn aus der Aschenbehälteraufnahme 2 auslöst.

Zum Auslösen des Aschenbehälters 1 aus der Aschenbehälteraufnahme 2 bei einer Überlast von der Seite her oder auch von schräg oben sind bei diesem Ausführungsbeispiel dem Aschenbehälter 1 Schrägflächen 5 als Teilbereiche der Seitenwandungen 6 zugeordnet. Wie aus Fig. 2 ersichtlich, erstreckt sich die Schrägfläche 5 mit ihrer Unterkante 7 von der Vorderkante 8 des Aschenbehälters 1 bis zur rückwärtig verlaufenden aufrechten Kante 9. Die Oberkante 10 der Schrägfläche 5 ist gegenüber der Unterkante 7 nur im hinteren, der Kante 9 zugelegenen Bereich ausgebildet. Demnach verläuft die Vorderkante 11 der Schrägfläche 5 schräg nach oben. Diese Vorderkante 11 liegt bei geöffnetem Ascher mit der Aussenkante der Aschenbehälteraufnahme 2 gleich.

Die Fig. 3 und 4 zeigen, stark schematisiert, weitere Ausführungsbeispiele des erfindungsgemässen Kippaschers, und zwar weist beim Ausführungsbeispiel nach Fig. 3 die Aschenbehälteraufnahme 2a die Schrägflächen 5a auf, während der Aschenbehälter 1a im wesentlichen quaderförmig ausgebildet ist.

Beim Ausführungsbeispiel nach Fig. 4 ist auch die Aschenbehälteraufnahme 2a entsprechend der Ausführungsform nach Fig. 3 vorgesehen, jedoch der Aschenbehälter 1b insbesondere mit seinen beiden Seitenkanten vollständig auf die Schrägflächen 5a abgestimmt.

## Patentansprüche

1. Kippascher, insbesondere für Fahrzeuge, dessen Aschenbehälter (1, 1a, 1b) von einem Lager federbelastet gehalten ist und durch Überlast von der Aschenbehälteraufnahme (2, 2a) trennbar ist,
dadurch gekennzeichnet,
dass die Seitenwandungen (6) des Aschenbehälters (1, 1a, 1b) und/oder die der Aschenbehälteraufnahme (2, 2a) Schrägflächen (5, 5a) aufweisen, deren Richtung von der Vorderkante aus, die Körperform des Aschenbehälters (1, 1a, 1b) bzw. der Aschenbehälteraufnahme (2, 2a) verjüngend, zur Rückwand verläuft.

2. Kippascher nach Patentanspruch 1,
dadurch gekennzeichnet,
dass die Schrägflächen (5) am Aschenbehälter (1) angeordnet sind und deren Vorderkante (11) bei geöffnetem Aschenbehälter (1) im wesentlichen deckungsgleich mit der Aussenkante der Aschenbehälteraufnahme (2) verläuft.

## Claims

1. A tiltable ash tray, particularly for a vehicle, the ash container (1, 1a, 1b) of which is held under spring bias on a support and is, if subjected to an overload, detachable from an ash-container receptacle (2, 2a)
characterized in that
the side walls (6) of the ash container (1, 1a, 1b) and/or those of the ash-container receptacle (2, 2a) include inclined faces (5, 5a) which are contained in converging planes extending from the front edge to the rear wall and which narrow the body of the ash container (1, 1a, 1b) and/or the ash-container receptacle (2, 2a) respectively.

2. A tiltable ash tray according to claim 1, characterized in that
the ash container (1) is provided with the inclined faces (5) the front edges (11) of which extend, when the ash container (1) is in its opened position, substantially coincidentally with the outer edge of the ash-container receptacle (2).

## Revendications

1. Cendrier basculant, en particulier pour véhicules, dont le récipient collecteur de cendres (1, 1a, 1b) est maintenu dans un support sous l'action d'un ressort et peut être séparé du logement (2, 2a) du récipient collecteur de cendres lorsqu'il est soumis à une surcharge,
caractérisé en ce que les parois latérales (6) du récipient collecteur de cendres (1, 1a, 1b) et/ou celles du logement (2, 2a) du récipient collecteur de cendres comprennent des surfaces obliques (5, 5a) dont la direction, à partir du rebord avant et jusqu'à la paroi arrière, donne au corps du récipient collecteur de cendres (1, 1a, 1b) ou du logement (2, 2a) de ce récipient collecteur de cendres une forme allant en diminuant.

2. Cendrier basculant selon la revendication 1, caractérisé en ce que les parois en oblique (5) sont prévues sur le récipient collecteur de cendres (1) et en ce que leur rebord avant (11), à l'état ouvert du récipient collecteur de cendres (1), est pratiquement au ras du rebord externe du logement (2) du récipient collecteur de cendres.

Fig. 1

Fig. 2

Fig. 3

Fig. 4